(19) Europäisches Patentamt / European Patent Office / Office européen des brevets

(11) **EP 2 505 446 B1**

(12) **EUROPEAN PATENT SPECIFICATION**

(45) Date of publication and mention
of the grant of the patent:
**18.12.2013 Bulletin 2013/51**

(51) Int Cl.:
***B60T 17/22*** *(2006.01)*  ***B60T 13/52*** *(2006.01)*

(21) Application number: **12161695.7**

(22) Date of filing: **28.03.2012**

(54) **Vehicular brake apparatus**

Fahrzeugbremsvorrichtung

Appareil de freinage véhiculaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2011 JP 2011082219
01.04.2011 JP 2011082241**

(43) Date of publication of application:
**03.10.2012 Bulletin 2012/40**

(73) Proprietor: **Honda Motor Co., Ltd.
Tokyo 107-8556 (JP)**

(72) Inventors:
• **Ohsaki, Seiji
Saitama 351-0193 (JP)**
• **Horii, Eisuke
Saitama 351-0193 (JP)**
• **Matsunobu, Miki
Saitama 351-0193 (JP)**
• **Yamada, Yousuke
Saitama 351-0193 (JP)**

(74) Representative: **Prechtel, Jörg et al
Weickmann & Weickmann
Patentanwälte
Postfach 86 08 20
81635 München (DE)**

(56) References cited:
**EP-A2- 1 114 925       DE-A1- 19 935 899
DE-A1-102007 003 741    JP-A- 10 157 613**

**Description**

Field of the Invention:

The present invention relates to a vehicular brake apparatus, and more particularly to a vehicular brake apparatus which is capable of judging a malfunction of a negative pressure detecting means that is connected to the negative pressure chamber of a negative-pressure-type booster.

Description of the Related Art:

Vehicular brake apparatus including a brake operating member such as a brake pedal or the like incorporate a hydraulic pressure system and a negative pressure system for assisting the driver in acting on the brake operating member. The hydraulic pressure system assists the driver in acting on the brake operating member by regulating, with a plurality of valves, the hydraulic pressure (brake fluid pressure) in pipes interconnecting a master cylinder and wheel cylinders. The negative pressure system assists the driver in acting on the brake operating member by generating a negative pressure with a vacuum pump or the like in synchronism with the driver's action on the brake operating member {for detail, see Japanese Laid-Open Patent Publication No. 10-157613 (hereinafter referred to as "JP10-157613A")}.

According to JP10-157613A, the vehicular brake apparatus decides that a pressure sensor (63) combined with a brake booster (71) that is connected to an engine intake pipe is determined to be malfunctioned if the value of an output signal from the pressure sensor (63) falls outside of a predetermined range based on the value of an output signal from an intake pressure sensor (61) which detects the intake pressure in the engine intake pipe (see Summary and Claim 1 of JP10-157613A).

In DE 10 2007 003 741 on which the preamble of claim 1 is based, the vacuum chamber of the booster is connected to a negative pressure source.

In DE 199 35 899 A1, the vacuum chamber of the booster is connected to the intake system of the engine. First to fourth evaluating units are provided using a brake actuated signal or a brake released signal.

SUMMARY OF THE INVENTION

According to JP10-157613A, a malfunction of the pressure sensor is judged by comparing the value of the output signal from the pressure sensor (negative pressure sensor or negative pressure detecting means) and the value of the output signal from the intake pressure sensor. The vehicular brake apparatus which uses the negative pressure in the intake pipe as the negative pressure in the brake booster (negative-pressure-type booster) is widely used mainly in vehicles powered by gasoline engines. However, vehicles powered by diesel engines with no throttle valve and electric vehicles with no engines do not require an intake pressure sensor. In addition, the vehicular brake apparatus according to JP10-157613A may possibly judge a malfunction of the pressure sensor even in the event of a malfunction of the intake pressure sensor. Furthermore, the vehicular brake apparatus according to JP10-157613A is structurally complex due to the intake pressure sensor used.

It is an object of the present invention to provide a vehicular brake apparatus which is capable of judging a malfunction of a negative pressure detector with a simple arrangement even in the absence of an output signal from an intake pressure sensor (intake pressure detecting means).

According to the present invention, there is provided a  vehicular brake apparatus in accordance with claim 1.

The vehicular brake apparatus comprises negative pressure detecting means connected to a negative pressure chamber of a negative-pressure-type booster, a master cylinder which is actuated under forces boosted by the negative-pressure-type booster in response to an input action applied to a brake operating member, for generating a fluid pressure to pressurize a wheel cylinder for thereby braking a road wheel, fluid pressure detecting means for detecting a master cylinder pressure or a wheel cylinder pressure, negative pressure estimating means for calculating an estimated value of a negative pressure of the negative-pressure-type booster based on the master cylinder pressure or the wheel cylinder pressure which is detected by the fluid pressure detecting means, and malfunction detecting means for detecting a malfunction of the negative pressure detecting means by comparing the estimated value of the negative pressure estimated by the negative pressure estimating means and a detected value of the negative pressure detected by the negative pressure detecting means with each other.

With the above arrangement, the malfunction detecting means detects a malfunction of the negative pressure detecting means by comparing the estimated value of the negative pressure based on the master cylinder pressure or the wheel cylinder pressure detected by the fluid pressure detecting means and the detected value of the negative pressure detected by the negative pressure detecting means with each other. Therefore, it is possible to judge a malfunction of the negative pressure detecting means with a simple arrangement even in the absence of an output signal from an intake pressure sensor. Accordingly, a malfunction  of the negative pressure detecting means can be judged without depending on the type of the vehicle, such as a vehicle powered by a gasoline engine, a vehicle powered by a diesel engine, or an electric vehicle including a hybrid vehicle or a fuel cell vehicle with a simple arrangement. As the negative pressure of the negative-pressure-type booster is estimated based on the master cylinder pressure or the wheel cylinder pressure, the fluid pressure detecting means may be combined with another sensor such as another negative pressure means or an intake pressure sensor for an excellent failsafe capability.

The negative pressure estimating means may include an input action increase determiner for judging an increase in the input action applied to the brake operating member, an input action decrease determiner for judging a decrease in the input action applied to the brake operating member, and consumed negative pressure quantity calculating means for calculating a consumed negative pressure quantity due to the increase and decrease in the input action, as the estimated value of the negative pressure. Since estimated value of the negative pressure is calculated using both an increase and a decrease in the input action on the brake operating member, it is possible to achieve a higher estimating accuracy than if only one of an increase and a decrease in the input action on the brake operating member is used.

The malfunction detecting means may not detect a malfunction of the negative pressure detecting means based on the estimated value of the negative pressure if a time-dependent change of the detected value of the negative pressure is less than a prescribed value. For example, if the time-dependent change of the detected value of the negative pressure is small, i.e., if the negative pressure varies slightly, then an erroneous judgment may be formed even using the detected value of the negative pressure. In such a case, the accuracy with which to detect a malfunction of the negative pressure detecting means can be kept at a high level by not detecting a malfunction of the negative pressure detecting means.

The malfunction detecting means may perform a sequence for judging a malfunction of the negative pressure detecting means only if at least one of the detected value of the negative pressure, the estimated value of the negative pressure, the master cylinder pressure, and the wheel cylinder pressure satisfies a prescribed reference value. In this manner, the accuracy with which to detect a malfunction of the negative pressure detecting means can be kept at a high level by detecting a malfunction of the negative pressure detecting means only in appropriate cases.

According to the present invention, the vehicular brake apparatus comprises a negative pressure pump for generating a negative pressure in response to operation of an actuator, a negative-pressure-type booster connected to the negative pressure pump, for boosting an input action applied to a brake pedal, pressure detecting means connected to a negative pressure chamber of the negative-pressure-type booster, for detecting a pressure in the negative pressure chamber, and malfunction judging means for judging a malfunction of the pressure detecting means based on an operating time period of the actuator and a detected value from the pressure detecting means.

With the above arrangement, the malfunction judging means judges a malfunction of the pressure detecting means based on the operating time period or operating state of the actuator and the detected value from the pressure detecting means. Since there is no need to use another pressure detecting means for judging a malfunction of the pressure detecting means, it is possible to judge a malfunction of the pressure detecting means with a simple arrangement.

The negative pressure pump may comprise a negative pressure pump directly actuated by an internal combustion engine. The malfunction detecting means may judge a malfunction of the pressure detecting means if a rotational speed of the internal combustion engine exceeds a rotational speed stabilization determining threshold value for judging whether a change in the rotational speed is stabilized or not. Therefore, if the negative pressure pump is directly actuated by the internal combustion engine, then a malfunction of the pressure detecting means can be judged with high accuracy.

The vehicular brake apparatus may further include fluid pressure detecting means for detecting a brake fluid pressure, and the malfunction detecting means may judge a malfunction of the pressure detecting means if the brake fluid pressure is equal to or lower than a brake operation threshold value for judging whether the brake operating member is operated or not. When the brake pedal is being operated, the pressure in the negative pressure chamber varies and tends to become unstable, so that it may not be possible to judge a malfunction of the pressure detecting means accurately. With the above arrangement, inasmuch as the pressure detecting means is judged for a malfunction when the brake pedal is not operated, a malfunction of the pressure detecting means can be judged highly accurately.

The vehicular brake apparatus may further include a supercharging device connected to the intake pipe of the internal combustion engine which is connected to the negative pressure chamber, and the second malfunction detecting means may inhibit a sequence for judging a malfunction of the pressure detecting means if the supercharging device malfunctions. Consequently, it is possible to prevent the pressure detecting means from being judged for a malfunction in error due to a negative pressure introduced into the supercharging device in the event of a malfunction of the supercharging device.

The above and other objects, features, and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 is a schematic diagram of a vehicle incorporating a vehicular brake apparatus according to an embodiment of the present invention;

FIG. 2 is a block diagram showing a hardware arrangement of an electronic control unit on the vehicle shown in FIG. 1 and functions performed by the hardware arrangement thereof;

FIG. 3 is a flowchart of a malfunction judging process for judging a malfunction of a negative pressure sensor according to the embodiment;

FIG. 4 is a flowchart of a malfunction judging sequence of a first malfunction judging process according to the embodiment;

FIG. 5 is a diagram showing processing details (calculation process) of the malfunction judging sequence of the first malfunction judging process;

FIG. 6 is a graph showing an example of the relationship between a brake fluid pressure and changes in a master power pressure at the time a brake pedal is pressed;

FIG. 7 is a flowchart of a sequence for calculating an estimated consumed quantity of M/P pressure according to the first malfunction judging process;

FIG. 8 is a flowchart of a sequence for judging a malfunction judging condition about a second malfunction judging process according to the embodiment;

FIG. 9 is a diagram showing an example of data of engine rotational speeds, atmospheric pressure, and master power pressures at the time of judging malfunction judging conditions about the second malfunction judging process and performing a subsequent processing sequence; and

FIG. 10 is a flowchart of a malfunction judging sequence of the second malfunction judging process.

DESCRIPTION OF THE PREFERRED EMBODIMENTS

A. Embodiment:

1. Arrangement of vehicle 10:

(1) Overall arrangement:

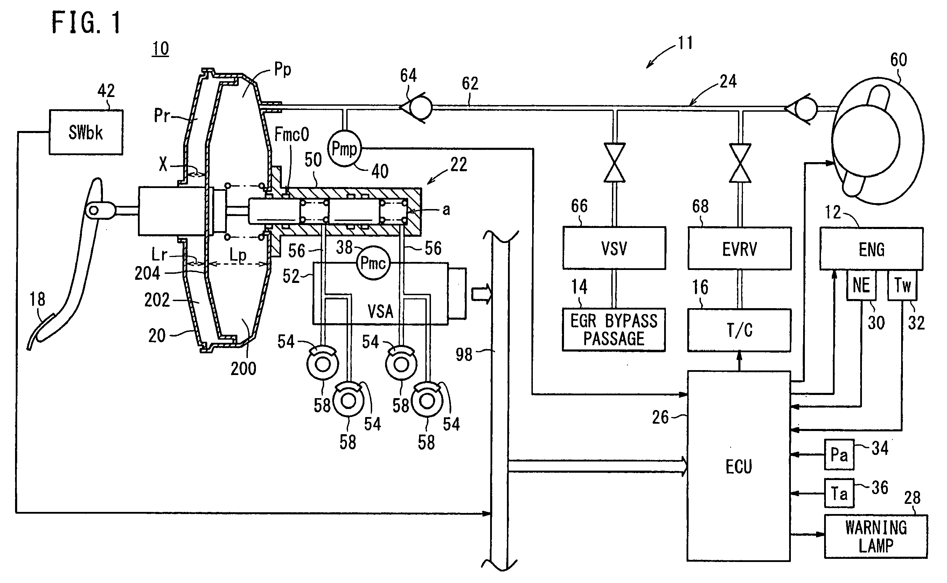

FIG. 1 is a schematic diagram of a vehicle 10 incorporating a vehicular brake apparatus 11 according to an embodiment of the present invention. The vehicle 10 according to the present embodiment is a vehicle powered by a diesel engine. However, the vehicle 10 may be a vehicle powered by a gasoline engine or an electric vehicle including a hybrid vehicle or a fuel cell vehicle.

As shown in FIG. 1, the vehicle 10 has an engine 12, an EGR bypass passage 14, a turbocharger (T/C) 16, a brake pedal 18, a brake booster (negative-pressure-type booster) 20, a hydraulic pressure system 22, a negative pressure system 24, an electronic control unit (ECU) 26, and a warning lamp 28. The brake pedal 18, the brake booster 20, the hydraulic pressure system 22, the negative pressure system 24, the ECU 26, and the warning lamp 28 are included in the vehicular brake apparatus 11. The vehicle 10 also includes an engine rotational speed sensor 30, a coolant temperature sensor 32, an atmospheric pressure sensor 34, an ambient air temperature sensor 36, a fluid pressure sensor 38, a negative pressure sensor 40, and a brake switch 42.

(2) Brake booster 20:

The brake booster 20 is connected to a negative pressure pump 60 for boosting or increasing an input action applied to the brake pedal 18. The brake booster 20 has a negative pressure chamber 200 and a variable pressure chamber 202 which are defined therein on both sides of a diaphragm 204.

(3) Hydraulic pressure system 22:

The hydraulic pressure system 22 includes a master cylinder 50 coupled to the brake booster 20, a valve mechanism 52 having a plurality of solenoid-operated valves (not shown), and a plurality of wheel cylinders 54 connected to the master cylinder 50 by the valve mechanism 52 and pipes 56, for applying braking forces to respective road wheels 58 of the vehicle 10.

(4) Negative pressure system 24:

The negative pressure system 24 has a negative pressure pump 60 connected to the negative pressure chamber 200 of the brake booster 20 by a pipe 62, and a check valve 64 disposed in the pipe 62. The EGR bypass passage 14 is connected to the pipe 62 through a vacuum switching valve (hereinafter referred to as "VSV") 66. The turbocharger 16 is connected to the pipe 62 through an electric vacuum regulating valve (hereinafter referred to as "EVRV") 68.

The negative pressure pump 60 is actuated by the rotational drive power generated by the engine 12 (direct actuating system). However, the negative pressure pump 60 may be actuated by drive power not generated by the engine 12, e.g., drive power generated by an electric motor (electric motor actuating system). The EGR bypass passage 14 is part of an exhaust gas recirculation (EGR) device.

(5) Various sensors:

The engine rotational speed sensor 30 detects a rotational speed of the engine 12 (hereinafter referred to as "engine rotational speed NE"). The coolant temperature sensor 32 detects a temperature Tw of the coolant of the engine 12. The atmospheric pressure sensor 34 detects an atmospheric pressure Pa. The ambient air temperature sensor 36 detects an ambient air temperature Ta. The fluid pressure sensor 38 detects a brake fluid pressure Pmc from the master cylinder 50. The negative pressure sensor 40, which is connected to the negative pressure chamber 200 of the brake booster 20, detects a pressure in the negative pressure chamber 200 (hereinafter referred to as "master power pressure PmpS" or "M/P pressure PmpS").

(6) ECU 26:

The ECU 26 controls the engine 12, the turbocharger 16, the hydraulic pressure system 22, the negative pressure system 24, and the warning lamp 28 through communication lines 98 or the like based on output signals (detected values) from the various sensors.

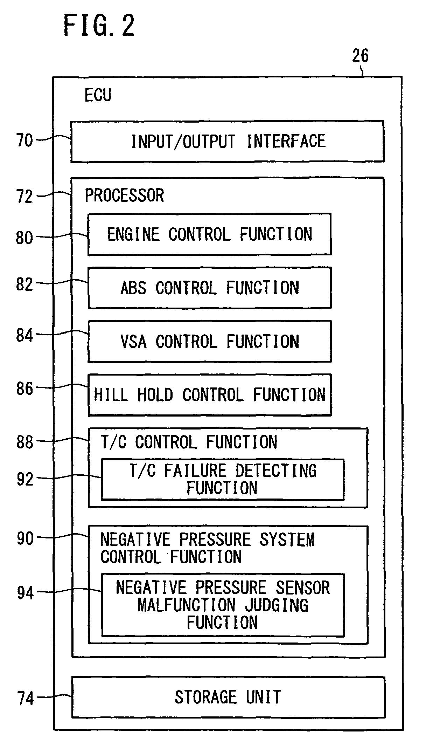

FIG. 2 shows in block form a hardware arrangement of the ECU 26 and functions performed by the hardware arrangement of the ECU 26. As shown in FIG. 2, the ECU 26 has an input/output interface 70, a processor 72, and a storage unit 74 as hardware components.

The processor 72 executes programs stored in the storage unit 74 to perform an engine control function 80, an anti-lock brake system control function 82 (hereinafter referred to as "ABS control function 82"), a vehicle behavior stabilizing system control function 84 (hereinafter referred to as "VSA control function 84"), a hill hold control function 86, a turbocharger control function 88 (hereinafter referred to as "T/C control function 88"), and a negative pressure system control function 90.

The engine control function 80 is a function to control the engine 12 based on a manipulated variable or the like of an accelerator pedal, not shown. The ABS control function 82 is a function to prevent the road wheels 58 from being locked when braking forces are applied from the hydraulic pressure system 22 to the road wheels 58, i.e., when the vehicle 10 is braked. The VSA control function 84 is a function to stabilize the behavior of the vehicle 10. Specifically, the VSA control function 84 includes a traction control function to prevent the road wheels 58 from spinning when the vehicle 10 is not braked, e.g., when the vehicle 10 is accelerated, a skid preventing function to prevent the vehicle 10 from skidding when it turns along a curve or the like, and an avoiding action assisting function to assist the driver in turning a steering wheel, not shown, of the vehicle 10 to avoid an obstacle.

The hill hold control function 86 is a function to actuate an electric parking brake, not shown, or the wheel cylinders 54 to prevent the vehicle 10 from moving if a given condition is satisfied, e.g., if a given time period has not elapsed after the driver releases the brake pedal 18, even though the brake pedal 18 is not depressed on a sloping road along the direction in which the vehicle 10 travels. The T/C control function 88 is a function to control the turbocharger 16, and includes a turbocharger failure detecting function 92 (hereinafter referred to as "T/C failure detecting function 92").

The negative pressure system control function 90 is a function to control the negative pressure system 24, e.g., the negative pressure pump 60, and includes a negative pressure sensor malfunction judging function 94. According to the present embodiment, the processor 72 performs the negative pressure sensor malfunction judging function 94 to judge a malfunction of the negative pressure sensor 40. 2. Outline of malfunction judging sequence for the negative pressure sensor 40 according to the present embodiment:

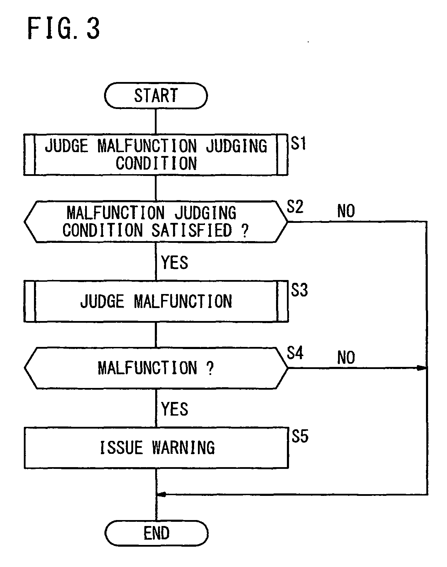

FIG. 3 is a flowchart of a malfunction judging process for judging a malfunction of the negative pressure sensor 40 according to the present embodiment. According to the present embodiment, two processes, i.e., a first malfunction judging process and a second malfunction judging process, are performed as the malfunction judging process for judging a malfunction of the negative pressure sensor 40.

In step S1 shown in FIG. 3, the ECU 26 judges a malfunction judging condition for carrying out the first malfunction judging process or the second malfunction judging process, as described in detail later.

In step S2, the ECU 26 determines whether the malfunction judging condition is satisfied or not based on the judgment made in step S1. If the malfunction judging condition is not satisfied (S2: NO), then the malfunction judging sequence is ended. If the malfunction judging condition is satisfied (S2: YES), then control goes to step S3.

In step S3, the ECU 26 performs a malfunction judging process on the negative pressure sensor 40, as described in detail later. If the negative pressure sensor 40 is not malfunctioning as a result of the malfunction judging process in step S3 (S4: NO), then the malfunction judging sequence is ended. If the negative pressure sensor 40 is malfunctioning (S4: YES), then the ECU 26 issues a warning to the driver in step S5. Specifically, the ECU 26 energizes the warning lamp 28 to let the driver know the malfunction of the negative pressure sensor 40. Alternatively or in addition, the ECU 26 may generate a warning sound from a speaker, not shown, to let the driver know the malfunction of the negative pressure sensor 40.

3. First malfunction judging process:

(1) Judging the malfunction judging condition (S1 in FIG.3):

The malfunction judging condition for carrying out the first malfunction judging process according to the present embodiment may be either that the idling of the vehicle 10 is stopped or that the hill hold control function 86 is being performed.

(2) Malfunction judging process (S3 in FIG. 3):

(2-1) Outline of malfunction judging process:

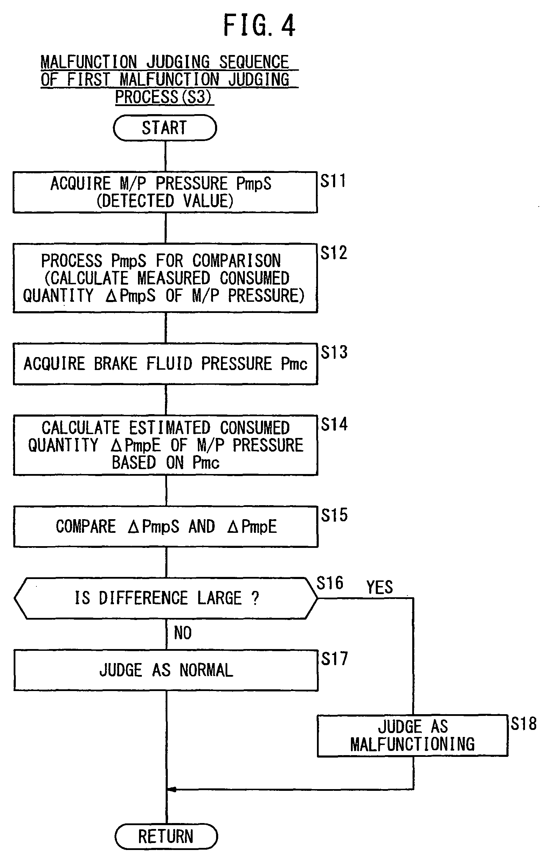

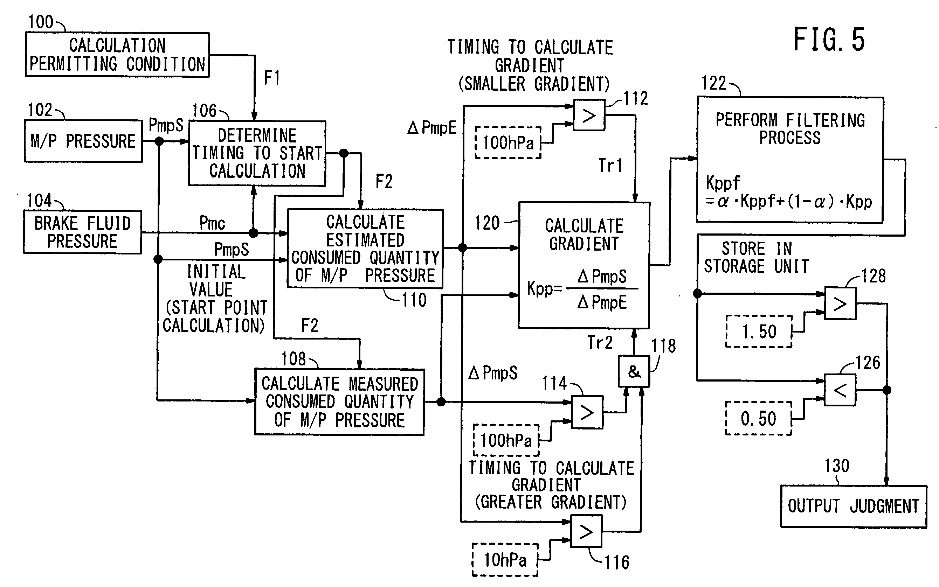

FIG. 4 is a flowchart of the first malfunction judging process in the first malfunction judging sequence shown in FIG. 3, i.e., details of step S3 in FIG. 3. The first malfunction judging process will be described below with reference to FIG. 4. Further details of the first malfunction judging process will subsequently be described later on with reference to FIGS. 5 through 7.

In step S11 shown in FIG. 4, the ECU 26 acquires a master power pressure PmpS (detected value) from the negative pressure sensor 40.

In step S12, the ECU 26 processes the M/P pressure PmpS for comparison with an estimated value to be described later, thereby calculating a measured consumed quantity Δ PmpS of master power pressure (hereinafter referred to as "measured consumed quantity ΔPmpS of M/P pressure" or "measured consumed quantity ΔPmpS"). The measured consumed quantity ΔPmpS of M/P pressure represents a measured value (accumulated value) of M/P pressure PmpS that is consumed when the brake pedal 18 is depressed, and is determined based on the M/P pressure PmpS from the negative pressure sensor 40.

In step S13, the ECU 26 acquires a brake fluid pressure Pmc from the fluid pressure sensor 38. In step S14, the ECU 26 calculates an estimated consumed quantity ΔPmpE of master power pressure (hereinafter referred to as "estimated consumed quantity ΔPmpE of M/P pressure" or "estimated consumed quantity ΔPmpE") based on the acquired brake fluid pressure Pmc. The estimated consumed quantity ΔPmpE of M/P pressure represents an estimated value (accumulated value) of M/P pressure PmpS that is consumed when the brake pedal 18 is depressed, and is determined mainly based on the brake fluid pressure Pmc.

In step S15, the ECU 26 compares the measured consumed quantity ΔPmpS calculated in step S12 and the estimated consumed quantity ΔPmpE calculated in step S14 with each other, and determines the difference therebetween. In step S16, the ECU 26 judges whether the difference between the measured consumed quantity ΔPmpS and the estimated consumed quantity ΔPmpE is large or not. If the difference is not large (S16: NO), then the ECU 26 decides that the negative pressure sensor 40 is normal in step S17. If the difference is large (S16: YES), then the ECU 26 decides that the negative pressure sensor 40 is malfunctioning in step S18.

(2-2) Details of malfunction judging process:

FIG. 5 is a diagram showing processing details (calculation process) of the malfunction judging sequence of the first malfunction judging process. The malfunction judging sequence shown in FIG. 5 is performed by the processor 72 of the ECU 26. In FIG. 5, a processing block 100 corresponds to the judging of the malfunction judging condition in step S1 shown in FIG. 3. If the malfunction judging condition (calculation permitting condition) is satisfied, then the processing block 100 outputs a malfunction judging permission flag (calculation permission flag F1) to a processing block 106. A processing block 102 outputs the M/P pressure PmpS to the processing blocks 106, 108, 110. The M/P pressure PmpS may be subjected to a predetermined filtering process for noise removal or the like.

The M/P pressure PmpS output from the processing block 102 to the processing block 110 may be of an initial value (hereinafter referred to as "initial value PmpS1") only. The initial value PmpS1 represents an M/P pressure PmpS detected immediately after the processing block 110 has received a calculation start flag F2 from the processing block 106. A processing block 104 outputs the brake fluid pressure Pmc from the fluid pressure sensor 38 to the processing blocks 106, 110.

The processing block 106 determines a timing for starting to calculate a measured consumed quantity ΔPmpS of M/P pressure and an estimated consumed quantity ΔPmpE of M/P pressure, based on the calculation permission flag F1 from the processing block 100, the M/P pressure PmpS (initial value PmpS1) from the processing block 102, and the brake fluid pressure Pmc from the processing block 104. Specifically, if the M/P pressure PmpS and the brake fluid pressure Pmc at the time the processing block 106 receives the calculation permission flag F1 are in a normal range, then the processing block 106 outputs a calculation start flag F2 to the processing blocks 108, 110.

In response to the calculation start flag F2 from the processing block 106, the processing block 108 calculates a measured consumed quantity ΔPmpS of M/P pressure based on the M/P pressure PmpS from the processing block 102. Specifically, the processing block 108 regards the value of an M/P pressure PmpS detected when it receives the calculation start flag F2 as an initial value PmpS1. Then, when the processing block 108 subsequently receives a new M/P pressure PmpS from the processing block 102, it calculates the difference between the received M/P pressure PmpS and the initial value PmpS1 as a measured consumed quantity ΔPmpS {ΔPmpS = PmpS(n) - PmpS1}. The processing block 108 outputs the calculated measured consumed quantity Δ PmpS to a judging block 114 and a processing block 120.

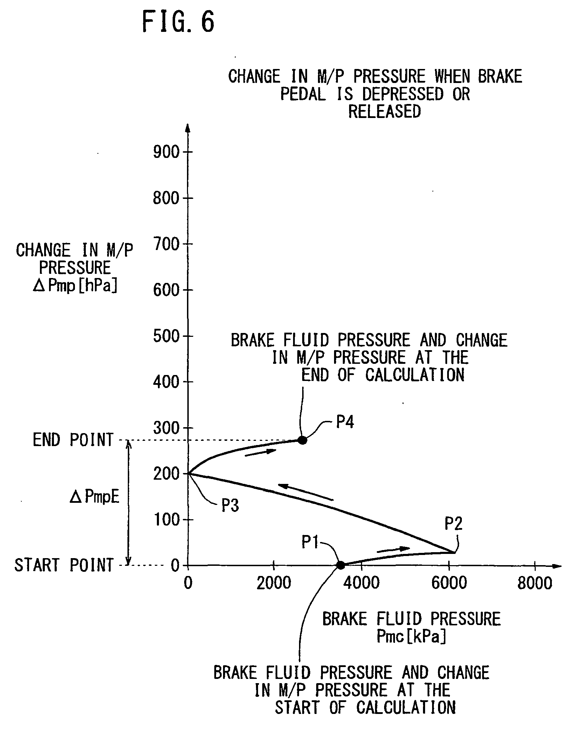

In response to the calculation start flag F2 from the processing block 106, the processing block 110 calculates an estimated consumed quantity ΔPmpE of M/P pressure, based on the initial value PmpS1 of the M/P pressure PmpS from the processing block 102 and the brake fluid pressure Pmc from the processing block 104. With respect to the calculation of an estimated consumed quantity ΔPmpE, the M/P pressure PmpS is consumed, i.e., a change in the M/P pressure PmpS (hereinafter referred to as "M/P pressure change ΔPmp" or "change ΔPmp") increases, either when the brake pedal 18 is depressed or when the brake pedal 18 is released, as shown in FIG. 6.

Specifically, if the combination of a brake fluid pressure Pmc and a change in the M/P pressure PmpS (M/P pressure change ΔPmp) at the time the processing block 110 receives the calculation start flag F2 and starts to calculate an estimated consumed quantity ΔPmpE of M/P pressure is represented by a point P1, then as the brake pedal 18 is depressed, the brake fluid pressure Pmc increases, and so does the change ΔPmp (accumulated value) until their combination reaches a point P2.

Thereafter, as the brake pedal 18 is released, the brake fluid pressure Pmc decreases, and the change ΔPmp (accumulated value) increases until their combination reaches a point P3. When the brake pedal 18 is depressed again, the brake fluid pressure Pmc increases, and the change ΔPmp (accumulated value) also increases. At the end of the calculating process performed by the processing block 110, the combination of the brake fluid pressure Pmc and the M/P pressure change ΔPmp is represented by a point P4. According to the present embodiment, the M/P pressure change Δ Pmp while the combination moves from the point P1 to the point P4 is used as an estimated consumed quantity ΔPmpE of M/P pressure.

According to the present embodiment, since the estimated consumed quantity ΔPmpE of M/P pressure is proportional to the pressure in the negative pressure chamber 200 (negative pressure chamber pressure Pp) of the brake booster 20, the estimated consumed quantity ΔPmpE can be determined from the negative pressure chamber pressure Pp. According to the present embodiment, furthermore, when the brake pedal 18 is depressed, a negative pressure chamber pressure Pp is calculated from a pressure change in the negative pressure chamber 200 which is caused by way of isothermal compression. When the brake pedal 18 is released, a negative pressure chamber pressure Pp is calculated from a balance of forces based on the brake booster 20. According to the present embodiment, moreover, a pressure in the variable pressure chamber 202 (variable pressure chamber pressure Pr) of the brake booster 20 can also be calculated. A specific process of calculating the negative pressure chamber pressure Pp and the variable pressure chamber pressure Pr will be described later.

The processing block 110 outputs the estimated consumed quantity ΔPmpE of M/P pressure which is calculated thereby to judging blocks 112, 116 and the processing block 120.

The judging block 112 judges whether the estimated consumed quantity ΔPmpE from the processing block 110 exceeds a prescribed threshold value TH1, which is 100 hPa according to the present embodiment, or not, and then outputs a gradient calculation trigger Tr1 representative of the judgment to the processing block 120. Specifically, the judging block 112 outputs the gradient calculation trigger Tr1 to the processing block 120 only when the estimated consumed quantity ΔPmpE is greater than the threshold value TH1.

The judging block 114 judges whether the measured consumed quantity ΔPmpS from the processing block 108 exceeds a prescribed threshold value TH2, which is 100 hPa according to the present embodiment, or not, and then outputs the judgment to a judging block 118. Specifically, the judging block 114 outputs a gradient calculation trigger Tr2 to the judging block 118 only when the measured consumed quantity ΔPmpS is greater than the threshold value TH2.

The judging block 116 judges whether the estimated consumed quantity ΔPmpE from the processing block 110 exceeds a prescribed threshold value TH3, which is 10 hPa according to the present embodiment, or not, and then outputs the judgment to the judging block 118. Specifically, the judging block 116 outputs a gradient calculation trigger Tr3 to the judging block 118 only when the estimated consumed quantity ΔPmpE is greater than the threshold value TH3. The gradient calculation trigger Tr3 is effective to prevent the denominator of an equation from becoming zero when the processing block 120 calculates a gradient Kpp according to the equation, as described later.

The judging block 118 has a function which is the same as an AND logic circuit that operates based on the judgments of the judging blocks 114, 116. Specifically, the judging block 118 judges whether the judging block 114 decides that the measured consumed quantity ΔPmpS exceeds the threshold value TH2 and the judging block 116 decides that the estimated consumed quantity ΔPmpE exceeds the threshold value TH3. The judging block 118 outputs the gradient calculation trigger Tr2 as representing its judgment to the processing block 120. Specifically, the judging block 118 outputs the gradient calculation trigger Tr2 to the processing block 120 only when the measured consumed quantity ΔPmpS is greater than the threshold value TH2 and the estimated consumed quantity ΔPmpE is greater than the threshold value TH3.

The processing block 120 calculates the ratio (gradient Kpp) of the measured consumed quantity ΔPmpS from the processing block 108 and the estimated consumed quantity Δ PmpE from the processing block 110, and outputs the calculated gradient Kpp to a filtering processor 122. If the processing block 120 does not receive the gradient calculation trigger Tr1 from the judging block 112, or the gradient calculation trigger Tr2 from the judging block 118, or the estimated consumed quantity ΔPmpE from the processing block 110, then the processing block 120 substitutes 1 in each of the measured consumed quantity ΔPmpS and the estimated consumed quantity ΔPmpE, and outputs a gradient Kpp (= 1) to the filtering processor 122.

The filtering processor 122 performs a prescribed filtering process on the gradient Kpp from the processing block 120, generating a filtered gradient Kppf. Specifically, the filtering processor 122 sets a coefficient α which is greater than 0 but smaller than 1, and uses the sum of the product of the coefficient α and a filtered gradient Kppf(n-1) in a preceding cycle and the product of the difference between 1 and the coefficient α and a gradient Kpp(n) in a present cycle, as a filtered gradient Kppf(n) in the present cycle {Kppf(n) = α·Kppf(n-1) + (1 - α )Kpp}. In this manner, the filtering processor 122 can produce a stable gradient value by canceling abrupt changes in the gradient Kpp before being corrected. The filtered gradient Kppf which is calculated by the filtering processor 122 is stored in the storage unit 74 and is also output to judging blocks 126, 128.

The judging block 126 judges whether the filtered gradient Kppf is smaller than a prescribed threshold value TH4 (0.50 in the present embodiment) or not, and outputs the judgment to a processing block 130. The judging block 128 judges whether the filtered gradient Kppf is greater than a prescribed threshold value TH5 (1.50 in the present embodiment) or not, and outputs the judgment to the processing block 130.

The processing block 130 judges whether the negative pressure sensor 40 is malfunctioning or not based on the judgments output from the judging blocks 126, 128. Specifically, if the judgment from the judging block 126 indicates that the gradient Kppf is smaller than the threshold value TH4, or if the judgment from the judging block 128 indicates that the gradient Kppf is greater than the threshold value TH5, then the processing block 130 decides that the negative pressure sensor 40 is malfunctioning. When the processing block 130 decides that the negative pressure sensor 40 is malfunctioning, it energizes the warning lamp 28 to emit warning light and stores a failure code representing the malfunction of the negative pressure sensor 40 in the storage unit 74.

(2-3) Detailed sequence for calculating estimated consumed quantity ΔPmpE of M/P pressure:

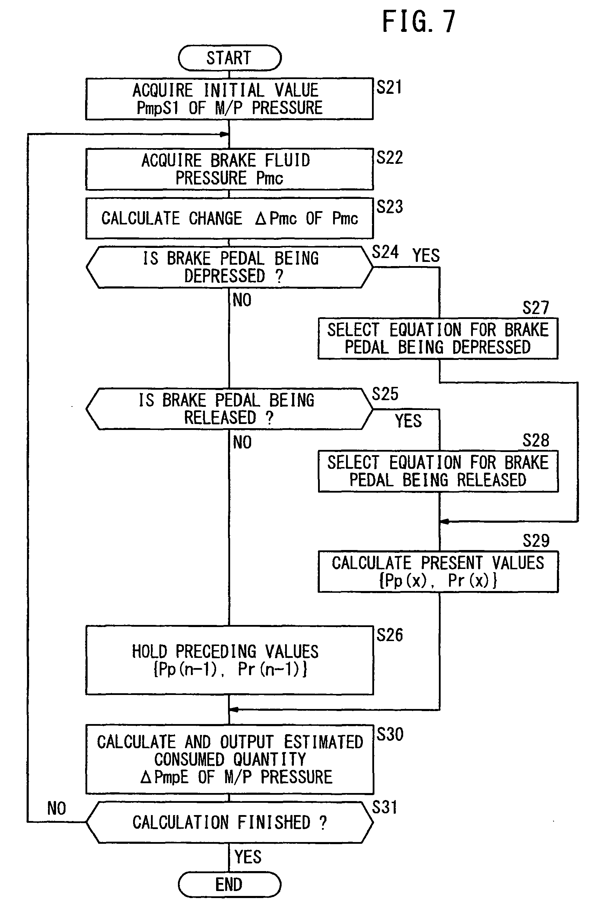

FIG. 7 is a flowchart of a sequence carried out by the processing block 110 for calculating an estimated consumed quantity of M/P pressure. In step S21 shown in FIG. 7, the processing block 110 acquires an initial value PmpS1 of the M/P pressure PmpS from the processing block 102. In step S22, the processing block 110 acquires a brake fluid pressure Pmc from the processing block 104.

In step S23, the processing block 110 calculates a brake fluid pressure change ΔPmc which represents the difference between a present value {Pmc(n)} and a preceding value {Pmc(n-1)} of the brake fluid pressure Pmc {ΔPmc = Pmc(n) - Pmc(n-1)}.

In step S24, the processing block 110 judges whether the brake pedal 18 is being depressed or not. Specifically, the processing block 110 establishes in advance a threshold value for determining whether the brake pedal 18 is being depressed or not (depression determining threshold value TH_ΔPmcH), and judges whether the brake fluid pressure change ΔPmc calculated in step S23 is in excess of the depression determining threshold value TH_ΔPmcH or not. If the brake pedal 18 is not being depressed (S24: NO), then control goes to step S25.

In step S25, the processing block 110 judges whether the brake pedal 18 is being released or not. Specifically, the processing block 110 establishes in advance a threshold value for determining whether the brake pedal 18 is being released or not (release determining threshold value TH_ΔPmcL), and judges whether the brake fluid pressure change ΔPmc calculated in step S23 is less than the release determining threshold value TH_ΔPmcL or not. If the brake pedal 18 is not being released (S25: NO), then control goes to step S26.

In step S26, the processing block 110 holds a preceding value {Pp(n-1)} of the negative pressure chamber pressure Pp as a present value {Pp(n)} of the negative pressure chamber pressure Pp, and also holds a preceding value {Pr(n-1)} of the variable pressure chamber pressure Pr as a present value {Pr(n)} of the variable pressure chamber pressure Pr. Then, control goes from step S26 to step S30.

If the brake pedal 18 is being depressed in step S24 (S24: YES), then the processing block 110 selects equations for calculating the negative pressure chamber pressure Pp and the variable pressure chamber pressure Pr, which are to be used when the brake pedal 18 is being depressed, in step S27, from which control goes to step S29. If the brake pedal 18 is being released in step S25 (S25: YES), then the processing block 110 selects equations for calculating the negative pressure chamber pressure Pp and the variable pressure chamber pressure Pr, which are to be used when the brake pedal 18 is being released, in step S28, from which control goes to step S29.

In step S29, the processing block 110 calculates present values of the negative pressure chamber pressure Pp and the variable pressure chamber pressure Pr according to the equations selected in step S27 or step S28, as will be described in detail later.

In step S30, the processing block 110 calculates an estimated consumed quantity ΔPmpE of M/P pressure, and outputs the calculated estimated consumed quantity ΔPmpE of M/P pressure to the judging blocks 112, 116 and the processing block 120. The estimated consumed quantity ΔPmpE of M/P pressure is calculated according to the following equation (1):

$$\Delta PmpE = PmpE - PmpS1 \qquad \cdots(1)$$

In step S31, the processing block 110 judges whether the calculation triggered by the calculation start flag F2 from the processing block 106 has finished or not. If the calculation has not finished (S31: NO), then control goes back to step S22. If the calculation has finished (S31: YES), then the present processing cycle is ended.

(2-4) Specific calculating processes:

(a) Definition:

Specific calculating processes for calculating the negative pressure chamber pressure Pp and the variable pressure chamber pressure Pr will be described below. First, various numerical values to be used in the calculating processes are defined as follows:

(i) Variables:

Pp: negative pressure chamber pressure [Pa];
Pr: variable pressure chamber pressure [Pa];
x: distance that the diaphragm 204 of the brake booster 20 moves [m];

(ii) Constants:

A: area of the diaphragm 204 [$m^2$];
a: effective diameter of the master cylinder 50 [$m^2$];
Lp: stroke of the negative pressure chamber 200 [m];
Lr: stroke of the variable pressure chamber 202 [m];
S: constant of the brake booster 20 {boosting ratio (servo ratio) - 1} (dimensionless);
$F_{mc0}$: startup load of the master cylinder 50 [N];
$k_{mc}$: efficiency of the master cylinder 50 (dimensionless);

(iii) Sensor values:

Pmp: master power pressure [Pa];
Pb: intake pressure in the pipe 62 [Pa];
Pmc: brake fluid pressure [Pa];

(b) When the brake pedal 18 is depressed:

(i) Negative pressure chamber pressure Pp:

When the gas in a closed space is isothermally compressed, a pressure P1 and a volume V1 of the gas before it is compressed, and a pressure P2 and a volume V2 of the gas after it is compressed are expressed by the following equation (2-1) according to the Boyle's law:

$$P1 \cdot V1 = P2 \cdot V2 \qquad \cdots (2-1)$$

The equation (2-1) is modified into the following equation (2-2):

$$P1 = (P2 \cdot V2)/V1 \qquad \cdots (2-2)$$

The above equation (2-2) is applicable to the air in the negative pressure chamber 200 according to the present embodiment.

The pressure of the air in the negative pressure chamber 200 may be expressed by the following equation (2-3) which uses the stroke Lp of the negative pressure chamber 200 and the distance x that the diaphragm 204 moves, instead of the volumes V1, V2 in the equation (2-2):

$$Pp_{(n)} = Pp_{(n-1)} \frac{Lp - x_{(n-1)}}{Lp - x_{(n)}} \qquad \cdots (2-3)$$

where "n-1" represents the state before the brake pedal 18 is depressed and "n" the state after the brake pedal 18 is depressed.

The distance x that the diaphragm 204 moves can be expressed as a function of the M/P pressure PmpS by the following equation (2-4):

$$x = f(Pmc) \qquad \cdots (2-4)$$

From the equations (2-3), (2-4), the following equation (2-5) is derived:

$$Pp_{(n)} = Pp_{(n-1)} \frac{Lp - f(Pmc_{(n-1)})}{Lp - f(Pmc_{(n)})} \qquad \cdots (2-5)$$

The negative pressure chamber pressure Pp can be regarded as an estimated value of the M/P pressure PmpS (estimated M/P pressure PmpE).

According to the equation (2-5), therefore, a negative pressure chamber pressure Pp (= estimated M/P pressure PmpE) can be calculated from the brake fluid pressures Pmc before and after the brake pedal 18 is depressed.

(ii) Variable pressure chamber pressure Pr:

Since forces on the diaphragm 204 between the negative pressure chamber 200 and the variable pressure chamber 202 are in equilibrium, the following equation (3-1) is derived:

$$\frac{S+1}{S}(Pr - Pp)A = F_{mc0} + P_{mc}a \times k_{mc} \quad \cdots (3\text{-}1)$$

The equation (3-1) can be modified into the equation (3-2) below, from which the equation (3-3) is derived.

$$Pr - Pp = \frac{S}{A(S+1)}(F_{mc0} + P_{mc}a \times k_{mc}) \quad \cdots (3\text{-}2)$$

$$Pr = Pp + \frac{S}{A(S+1)}(F_{mc0} + P_{mc}a \times k_{mc}) \quad \cdots (3\text{-}3)$$

From the equations (2-3), (3-3), the following equation (3-4) is derived:

$$Pr = Pp_{(n\text{-}1)}\frac{Lp - x_{(n\text{-}1)}}{Lp - x_{(n)}} + \frac{S}{A(S+1)}(F_{mc0} + P_{mc}a \times k_{mc}) \quad \cdots (3\text{-}4)$$

As described above, the distance x that the diaphragm 204 moves can be expressed as a function of the M/P pressure PmpS {see the equation (2-4)}. Therefore, the variable pressure chamber pressure Pr can be calculated from the brake fluid pressures Pmc before and after the brake pedal 18 is depressed.

(c) When the brake pedal 18 is released:

A widely known equation of state for gases is represented by the following equation (4-1):

$$PV = nRT \quad \cdots (4\text{-}1)$$

where P indicates the pressure of the gas, V the volume taken up by the gas, n the amount of material (molar number) of the gas, R a gas constant, and T the thermodynamic temperature of the gas.
Since the negative pressure chamber 200 is a closed space, the following equation (4-2) is derived from the equation of state for gases {the equation (4-1)}:

$$nR(n) + nP(n) = nR(n\text{-}1) + nP(n\text{-}1) \quad \cdots (4\text{-}2)$$

According to the present embodiment, using the negative pressure chamber pressure Pp, the variable pressure chamber pressure Pr, the stroke Lp of the negative pressure chamber 200, the stroke Lr of the variable pressure chamber 202, and the distance x that the diaphragm 204 moves, the equation (4-2) can be modified into the following equation (4-3):

$$Pr(n)\cdot\{Lr + x(n)\} + Pp(n)\cdot\{Lp - x(n)\} = Pr(n\text{-}1)\cdot\{Lr + x(n\text{-}1)\} + Pp(n\text{-}1)\cdot\{Lp - x(n\text{-}1)\} \quad \cdots (4\text{-}3)$$

Now, the following definitions are proposed:

$$\alpha = \{Lr + x(n)\}$$

$$\beta = \{Lp - x(n)\}$$

$$\gamma = Pr(n-1) \cdot \{Lr + x(n-1)\}$$

$$\delta = Pp(n-1) \cdot \{Lp - x(n-1)\}$$

From the equation (4-3) and the above definitions, the following equation (4-4) is derived:

$$Pr \cdot \alpha + Pp \cdot \beta = \gamma + \delta \qquad \cdots (4-4)$$

By solving the equations (3-2), (4-4) with the definitions of $\alpha$, $\beta$ for the negative pressure chamber pressure Pp and the variable pressure chamber pressure Pr, the following equations (4-5), (4-6) are derived:

$$Pp = \frac{1}{Lp+Lr}\left\{ \gamma + \delta - \frac{\bar{S}\alpha}{A(S+1)}\left(F_{mc0} + P_{mc}a \times k_{mc}\right)\right\} \quad \cdots (4-5)$$

$$Pr = \frac{1}{Lp+Lr}\left\{ \gamma + \delta + \frac{S\beta}{A(S+1)}\left(F_{mc0} + P_{mc}a \times k_{mc}\right)\right\} \quad \cdots (4-6)$$

As described above, the distance x that the diaphragm 204 moves can be expressed as a function of the M/P pressure PmpS {see the equation (2-4)}. Therefore, the negative pressure chamber pressure Pp and the variable pressure chamber pressure Pr can be calculated from the brake fluid pressures Pmc before and after the brake pedal 18 is depressed. The negative pressure chamber pressure Pp can be regarded as an estimated value of the M/P pressure PmpS (estimated M/P pressure PmpE).

4. Second malfunction judging process:

(1) Judging the malfunction judging condition (S1, FIG. 3):

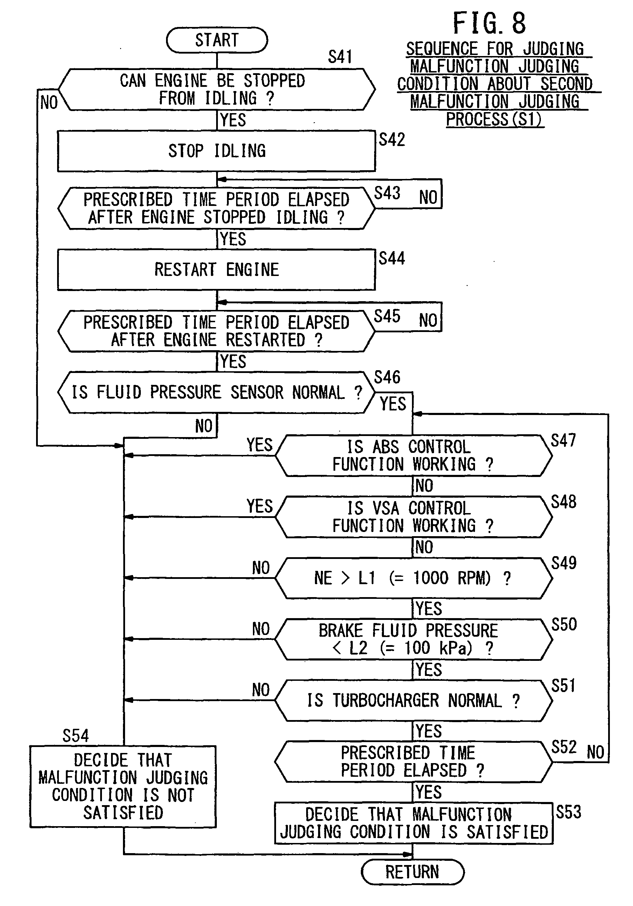

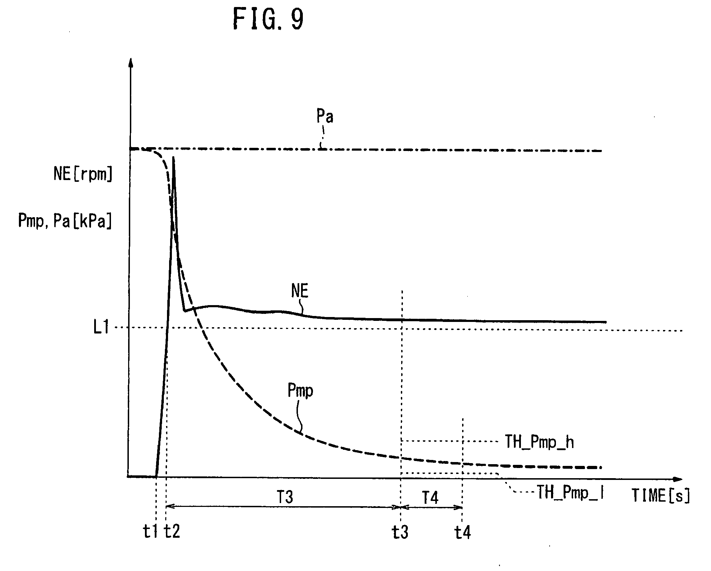

FIG. 8 is a flowchart of a sequence for judging a malfunction judging condition about a second malfunction judging process according to the embodiment, i.e., details of step S1 in FIG. 3. FIG. 9 is a diagram showing an example of data of engine rotational speeds, atmospheric pressure, and master power pressures at the time of judging malfunction judging conditions about the second malfunction judging process and performing a subsequent processing sequence.
In step S41 shown in FIG. 8, the ECU 26 judges whether it is possible to stop the engine 12 from idling or not. Specifically, the ECU 26 judges whether it is possible to stop the engine 12 from idling or not by judging whether or not the temperature Tw of the coolant of the engine 12 detected by the coolant temperature sensor 32 is equal to or higher than a prescribed threshold value (coolant temperature threshold value TH_tw) and whether or not the ambient air temperature Ta detected by the ambient air temperature sensor 36 is equal to or higher than a prescribed threshold value (outside air temperature threshold value TH_ta).
If it is not possible to stop the engine 12 from idling (S41: NO), then the ECU 26 decides that the malfunction judging condition is not satisfied in step S54. If it is possible to stop the engine 12 from idling (S41: YES), then the ECU 26 stops the engine 12 from idling in step S42.
In step S43, the ECU 26 judges whether a prescribed time period (time period T1) has elapsed after it stopped the engine 12 from idling. The time period T1 is a time period long enough for various components to shut down due to the stopping of the idling of the engine 12. If the time period T1 has not elapsed after the engine 12 stopped idling (S43: NO), then the ECU 26 repeats step S43. If the time period T1 has elapsed after the engine 12 stopped idling (S43: YES), then control goes to step S44.

In step S44, the ECU 26 restarts the engine 12 (at time t1 in FIG. 9). In step S45, the ECU 26 judges whether a prescribed time period (time period T2) has elapsed after the engine 12 restarted or not. The time period T2 may be set to a time period for the engine 12 to become stable after it restarted. If the time period T2 has not elapsed after the engine 12 restarted (S45: NO), then the ECU 26 repeats step S45. If the time period T2 has elapsed after the engine 12 restarted (S45: YES), then control goes to step S46.

In step S46, the ECU 26 judges whether the fluid pressure sensor 38 is operating normally or not. The ECU 26 judges whether the fluid pressure sensor 38 is operating normally or not by judging, for example, whether the output signal (output voltage) from the fluid pressure sensor 38 is of a value which is impossible if the fluid pressure sensor 38 is operating normally. If the fluid pressure sensor 38 is operating normally (S46: YES), then control goes to step S47. If the fluid pressure sensor 38 is not operating normally (S46: NO), then the ECU 26 decides that the malfunction judging condition is not satisfied in step S54. At this time, the ECU 26 may energize the warning lamp 28 to indicate that the malfunction judging condition is not satisfied.

In step S47, the ECU 26 judges whether the ABS control function 82 is working or not. If the ABS control function 82 is working (S47: YES), then the ECU 26 decides that the malfunction judging condition is not satisfied in step S54. If the ABS control function 82 is not working (S47: NO), then the ECU 26 judges whether the VSA control function 84 is working or not in step S48. If the VSA control function 84 is working (S48: YES), then the ECU 26 decides that the malfunction judging condition is not satisfied in step S54. If the VSA control function 84 is not working (S48: NO), then control goes to step S49.

In step S49, the ECU 26 judges whether the engine rotational speed NE from the engine rotational speed sensor 30 exceeds a prescribed lower limit value L1 (rotational speed stabilization determining threshold value) or not. According to the present embodiment, the negative pressure pump 60 is directly actuated by the engine 12 (direct actuating system). The lower limit value L1 is set to a value of 1000 rpm, for example, which can stabilize a change [rpm/s] in the engine rotational speed NE. Alternatively, the lower limit value L1 may be set to a value that is equal to or higher than the engine rotational speed NE for the maximum performance of the negative pressure pump 60. When the engine rotational speed NE exceeds the lower limit value L1, therefore, it is known that the negative pressure pump 60 is operating stably. In addition to comparing the engine rotational speed NE with the lower limit value L1, the ECU 26 may also judge whether the engine rotational speed NE falls in a prescribed range, e.g., a range from 800 rpm to 810 rpm, or not. If the engine rotational speed NE does not exceed the lower limit value L1 (S49: NO), then the ECU 26 decides that the malfunction judging condition is not satisfied in step S54. If the engine rotational speed NE exceeds the lower limit value L1 (S49: YES, at time t2 in FIG. 9), then control goes to step S50.

In step S50, the ECU 26 judges whether the brake fluid pressure Pmc is lower than a prescribed lower limit value L2 (brake operation threshold value) or not. The lower limit value L2 is set to a value of 100 kPa, for example, for judging whether the brake pedal 18 is being operated or not. If the brake fluid pressure Pmc is equal to or higher than the lower limit value L2 (S50: NO), then the ECU 26 decides that the brake pedal 18 is being operated. In this case, the ECU 26 decides that the malfunction judging condition is not satisfied in step S54. If the brake fluid pressure Pmc is lower than the lower limit value L2 (S50: YES), then the ECU 26 decides that the brake pedal 18 is not being operated. In this case, control goes to step S51.

In step S51, the ECU 26 judges whether the turbocharger 16 is operating normally or not, using the T/C failure detecting function 92 of the processor 72. If the turbocharger 16 is operating normally (S51: YES), then control goes to step S52. If the turbocharger 16 is not operating normally (S51: NO), then the ECU 26 decides that the malfunction judging condition is not satisfied in step S54.

In step S52, the ECU 26 judges whether a prescribed time period (time period T3) has elapsed after step S47 started or not. The time period T3 serves as a threshold value in the range from 10 seconds to 60 seconds, for example, for judging whether the operation of the engine 12 is stabilized into a state that is suitable for judging a malfunction or not. If the time period T3 has not elapsed (S52: NO), then control goes back to step S47. If the time period T3 has elapsed (S52: YES, at time t3 in FIG. 9), then the ECU 26 decides that the malfunction judging condition about the second malfunction judging process is satisfied in step S53.

(2) Malfunction judging sequence (S3 in FIG. 3):

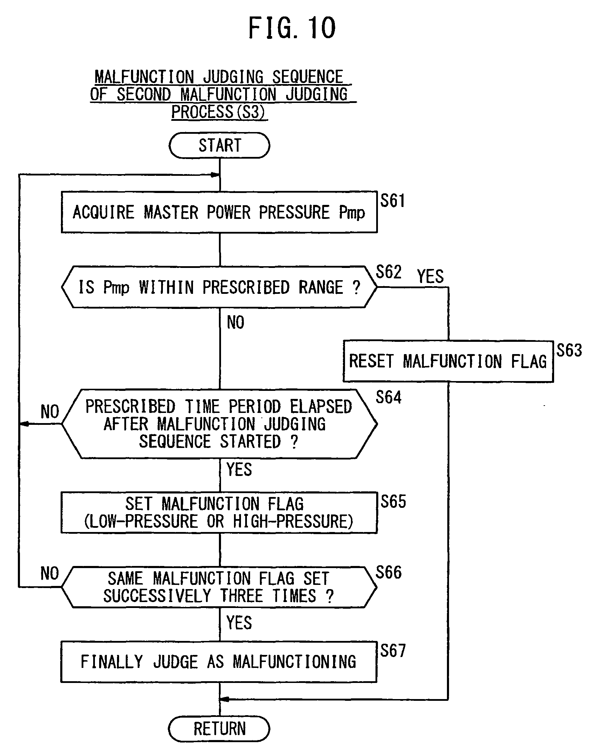

FIG. 10 is a flowchart of a malfunction judging sequence of the second malfunction judging process, i.e., details of step S3 in FIG. 3 (after time t3 in FIG. 9). In step S61 shown in FIG. 10, the ECU 26 acquires a master power pressure Pmp from the negative pressure sensor 40.

In step S62, the ECU 26 judges whether the M/P pressure Pmp falls in a prescribed range or not. Specifically, the ECU 26 compares the M/P pressure Pmp with an upper limit value TH_Pmp_h and a lower limit value TH_Pmp_l which the M/P pressure Pmp can have based on the relationship between the engine rotational speed NE and the performance of the negative pressure pump 60 at this time, and judges whether the M/P pressure Pmp is equal to or higher than the lower limit value TH_Pmp_l and equal to or lower than the upper limit value TH_Pmp_h or not. The upper limit value TH_Pmp_h and the lower limit value TH_Pmp_l are established in advance as an experimental value or a simulated value and stored in the storage unit 74.

If the M/P pressure Pmp falls in the prescribed range (S62: YES), then the ECU 26 resets a malfunction flag F11 indicative of the occurrence of a malfunction of the negative pressure sensor 40 in step S63. According to the present embodiment, in step S63 and also in step S64, if the M/P pressure Pmp falls in the prescribed range even once within a prescribed time period (time period T4 to be described later), then the ECU 26 decides that the negative pressure sensor 40 is not malfunctioning. If the M/P pressure Pmp does not fall in the prescribed range (S62: NO), then control goes to step S64.

In step S64, the ECU 26 judges whether a prescribed time period (time period T4, i.e., from time t3 to time t4 in FIG. 9) has elapsed or not after the malfunction judging sequence started. The time period T4 may be established as a time period of 0.5 second, for example, required for judging a malfunction of the negative pressure sensor 40. If the time period T4 has not elapsed (S64: NO), then control goes back to step S61. If the time period T4 has elapsed (S64: YES), then the ECU 26 sets the malfunction flag F11 in step S65. The malfunction flag F11 includes a low-pressure malfunction flag F111 indicating that the M/P pressure Pmp becomes lower than the lower limit value TH_Pmp_l and a high-pressure malfunction flag Fllh indicating that the M/P pressure Pmp becomes higher than the upper limit value TH_Pmp_h.

In step S66, the ECU 26 judges whether the same malfunction flag F11 (the low-pressure malfunction flag F111 or the high-pressure malfunction flag F11h) has been set successively three times or not. If the same malfunction flag F11 has not been set successively three times (S66: NO), then control goes back to step S61. If the same malfunction flag F11 has been set successively three times (S66: YES), then the ECU 26 finally decides that the negative pressure sensor 40 has malfunctioned in step S67.

4. Advantages of the present embodiment:

(1) First malfunction judging process:

As described above, the vehicular brake apparatus 11 according to the present embodiment includes the negative pressure sensor 40 (negative pressure detecting means) connected to the negative pressure chamber 200 of the brake booster 20 (negative-pressure-type booster) and the master cylinder 50 which is actuated under forces boosted by the brake booster 20 in response to an input action applied to the brake pedal 18 (brake operating member), for generating by the master cylinder 50 a fluid pressure to pressurize the wheel cylinders 54 for thereby braking the road wheels 58. The vehicular brake apparatus 11 also includes the fluid pressure sensor 38 (fluid pressure detecting means) for detecting a brake fluid pressure Pmc (master cylinder pressure), a negative pressure estimating function of the ECU 26 for calculating an estimated value PmpE of M/P pressure (estimated consumed quantity ∆PmpE of M/P pressure) of the brake booster 20 based on the brake fluid pressure Pmc detected by the fluid pressure sensor 38, and a malfunction detecting function of the ECU 26 for detecting a malfunction of the negative pressure sensor 40 by comparing the estimated value PmpE of M/P pressure estimated by the negative pressure sensor malfunction judging function 94 and the M/P pressure PmpS detected by the negative pressure sensor 40 (measured consumed quantity ∆PmpS of M/P pressure) with each other.

According to the present embodiment, a malfunction of the negative pressure sensor 40 is detected by comparing the estimated value PmpE of M/P pressure (estimated consumed quantity ∆PmpE of M/P pressure) based on the brake fluid pressure Pmc detected by the fluid pressure sensor 38 and the M/P pressure PmpS detected by the negative pressure sensor 40 (measured consumed quantity ∆PmpS of M/P pressure) with each other. Therefore, it is possible to judge a malfunction of the negative pressure sensor 40 with a simple arrangement even in the absence of an output signal from an intake pressure sensor. Accordingly, a malfunction of the negative pressure sensor 40 can be judged without depending on the type of the vehicle 10 or the propulsive source thereof, such as a vehicle powered by a gasoline engine, a vehicle powered by a diesel engine, or an electric vehicle including a hybrid vehicle or a fuel cell vehicle. As the negative pressure of the brake booster 20 is estimated based on the brake fluid pressure Pmc, the fluid pressure sensor 38 may be combined with another sensor such as another negative pressure sensor or an intake pressure sensor for an excellent failsafe capability.

According to the present embodiment, both an increase and a decrease in the input action on the brake pedal 18 are used to calculate the estimated value PmpE of M/P pressure (estimated consumed quantity ∆PmpE of M/P pressure). It is thus possible to achieve a higher estimating accuracy than if only one of an increase and a decrease in the input action on the brake pedal 18 is used.

According to the present embodiment, if the measured consumed quantity ∆PmpS of M/P pressure is less than the threshold value TH2, the ECU 26 (negative pressure sensor malfunction judging function 94) does not detect a malfunction of the negative pressure sensor 40 based on the estimated value PmpE of M/P pressure (the judging block 114 shown in FIG. 5). For example, if the measured consumed quantity ΔPmpS is small, e.g., if the negative pressure varies slightly, an erroneous judgment may be formed even using the M/P pressure PmpS. In such a case, the accuracy with which to detect a malfunction of the negative pressure sensor 40 can be kept at a high level by not detecting a malfunction of the negative pressure sensor 40.

The ECU 26 (negative pressure sensor malfunction judging function 94) carries out a sequence for judging a malfunction of the negative pressure sensor 40 only if the measured consumed quantity ΔPmpS is greater than the threshold value TH2 (judging block 114) or if the estimated consumed quantity ΔPmpE is greater than the threshold values TH1, TH3 (judging blocks 112, 116). In this manner, the accuracy with which to detect a malfunction of the negative pressure sensor 40 can be kept at a high level by detecting a malfunction of the negative pressure sensor 40 only in appropriate cases.

(2) Second malfunction judging process:

The negative pressure system 24 according to the present embodiment includes the negative pressure pump 60 which generates a negative pressure when actuated by the engine 12 (actuator), the brake booster 20 (negative-pressure-type booster) connected to the negative pressure pump 60 for boosting an input action applied to the brake pedal 18, the negative pressure sensor 40 (pressure detecting means) connected to the negative pressure chamber 200 of the brake booster 20 for detecting the pressure in the negative pressure chamber 200, and the ECU 26 (second malfunction detecting means) for judging a malfunction of the negative pressure sensor 40 based on the operating period (time period T4) of the negative pressure pump 60 or the engine 12 and the detected value (M/P pressure Pmp) of the negative pressure sensor 40.

According to the present embodiment, a malfunction of the negative pressure sensor 40 is judged based on the operating period (time period T4) of the negative pressure pump 60 and the detected value (M/P pressure Pmp) of the negative pressure sensor 40. Therefore, since there is no need to use another pressure detecting means such as another negative pressure sensor, an intake pressure sensor, or the like for judging a malfunction of the negative pressure sensor 40, a malfunction of the negative pressure sensor 40 can be judged with a simple arrangement.

According to the present embodiment, the negative pressure pump 60 is directly actuated by the engine 12 (direct actuating system), and the negative pressure sensor 40 is judged for a malfunction on the condition that the engine rotational speed NE is equal to or higher than the lower limit value L1 which is used to judge whether a change in the engine rotational speed NE is stabilized (S49 in FIG. 8). Consequently, in the case where the negative pressure pump 60 is directly actuated by the engine 12 (direct actuating system), the negative pressure sensor 40 is judged for a malfunction with high accuracy.

According to the present embodiment, a malfunction of the negative pressure sensor 40 is judged on the condition that the brake fluid pressure Pmc is equal to or lower than the lower limit value L2 which is used to judge whether the brake pedal 18 is operated or not (S50 in FIG. 8). When the brake pedal 18 is being operated, since the pressure in the negative pressure chamber 200 increases and tends to become unstable, it may not be possible to detect a malfunction of the negative pressure sensor 40 accurately. According to the present embodiment, however, inasmuch as the negative pressure sensor 40 is judged for a malfunction when the brake pedal 18 is not being operated, a malfunction of the negative pressure sensor 40 is judged to a nicety. Furthermore, a malfunction of the negative pressure sensor 40 is prevented from being judged in error provided it judged on the additional condition that the brake switch 42 is turned on.

According to the present embodiment, the ECU 26 inhibits the execution of a sequence to judge a malfunction of the negative pressure sensor 40 in the event of a malfunction of the turbocharger 16 (S51: NO in FIG. 8). Consequently, it is possible to prevent the negative pressure sensor 40 from being judged for a malfunction in error due to a negative pressure introduced into the turbocharger 16 in the event of a malfunction of the turbocharger 16.

B. Modifications:

The present invention is not limited to the above embodiment, but various changes and modifications may be made thereto based on the above description. Examples of such changes and modifications will be described below.

1. Vehicle 10:

In the above embodiment, the vehicle 10 is a vehicle powered by a diesel engine. However, the vehicle 10 may be an electric vehicle including a hybrid vehicle or a fuel cell vehicle or a vehicle powered by a gasoline engine.

2. Negative pressure pump 60 (means for and method of generating a negative pressure):

In the above embodiment, the negative pressure pump 60 is actuated by the rotational drive power generated by the engine 12 (direct actuating system). However, the negative pressure pump 60 may be actuated drive power generated by an electric motor (electric motor actuating system).

In the above embodiment, the negative pressure (M/P pressure PmpS) in the negative pressure system 24 is generated by the negative pressure pump 60, the EGR bypass passage 14, and the turbocharger 16. However, the negative pressure may be generated by other means and methods. For example, the negative pressure may be generated by one or two of the negative pressure pump 60, the EGR bypass passage  14, and the turbocharger 16.

3. Malfunction judging sequence for judging a malfunction of the negative pressure sensor 40:

(1) First malfunction judging process:

(1-1. Condition for judging a malfunction)

In the above embodiment, a malfunction is judged when the engine 12 stops idling and when the vehicle 10 is prevented from moving on a sloping road. However, a malfunction may be judged when the vehicle 10 starts moving, i.e., when the brake pedal 18 is released, or when the vehicle 10 is traveling.

In the above embodiment, the negative pressure sensor 40 is judged for a malfunction if the measured consumed quantity ∆PmpS of M/P pressure exceeds the threshold value TH2 (judging block 114) or if the estimated consumed quantity ∆PmpE is greater than the threshold values TH1, TH3 (judging blocks 112, 116). However, the negative pressure sensor 40 may be judged for a malfunction only if the brake fluid pressure Pmc satisfies a prescribed reference value.

(1-2. Details of malfunction judging sequence)

In the above embodiment, the estimated M/P pressure PmpE and the estimated consumed quantity ∆PmpE of M/P pressure are calculated based on the brake fluid pressure Pmc in the master cylinder 50 (master cylinder pressure). However, they may be calculated based on the brake fluid pressures in the wheel cylinders 54 (wheel cylinder pressures).

In the above embodiment, the estimated consumed quantity ∆PmpE of M/P pressure as an accumulation of estimated values of the M/P pressure PmpS and the measured  consumed quantity ∆PmpS of M/P pressure as an accumulation of measured values of the M/P pressure PmpS are compared with each other to judge a malfunction of the negative pressure sensor 40. However, a malfunction of the negative pressure sensor 40 may be judged based on a negative pressure detected by the negative pressure sensor 40 and an estimated value of negative pressure based on the brake fluid pressure Pmc. For example, a malfunction of the negative pressure sensor 40 may be judged by comparing instantaneous values of the estimated and measured values of the M/P pressure PmpS.

(1-3. Others)

In the above embodiment, a malfunction of the negative pressure sensor 40 is judged based on a detected value of the brake fluid pressure Pmc from the fluid pressure sensor 38. Conversely, a malfunction of the fluid pressure sensor 38 may be judged based on a detected value from the negative pressure sensor 40. Stated otherwise, in addition to the fluid pressure sensor 38 and the negative pressure sensor 40, a means for monitoring the fluid pressure sensor 38 or the negative pressure sensor 40 for a malfunction, e.g., another negative pressure sensor or an intake pressure sensor as disclosed in JP10-157613A, may be employed for an excellent failsafe capability.

(2) Second malfunction judging process:

(2-1. Condition for judging a malfunction)

In the above embodiment, the ECU 26 judges whether a malfunction is to be judged or not according to the sequence shown in FIG. 8.

For example, according to the sequence shown in FIG. 8,  the ECU 26 decides that a malfunction judging condition is satisfied if the engine rotational speed NE exceeds the lower limit value L1 (S49: YES in FIG. 8). However, the ECU 26 may not judge whether a malfunction judging condition is satisfied or not if the negative pressure pump 60 is not directly actuated by the engine 12.

Furthermore, according to the sequence shown in FIG. 8, the ECU 26 decides that a malfunction judging condition is satisfied if the brake fluid pressure Pmc in the master cylinder 50 (master cylinder pressure) is lower than the lower limit value L2 (S50: YES in FIG. 8). However, the ECU 26 may judge whether a malfunction judging condition is satisfied or not based on the brake fluid pressures in the wheel cylinders 54 (wheel cylinder pressures), rather than the brake fluid pressure Pmc in the master cylinder 50 (master cylinder pressure). Further alternatively, the ECU 26 may not judge whether a malfunction judging condition is satisfied or not.

Other judging steps of the sequence shown in FIG. 8 may be omitted.

(2-2. Details of malfunction judging sequence)

In the above embodiment, a malfunction of the negative pressure sensor 40 is judged according to the malfunction judging sequence shown in FIG. 10. However, a range (or an upper limit value thereof or a lower limit value thereof) within which the detected value (M/P pressure Pmp) from the negative pressure sensor 40 can fall may be established based on the operating state of the negative pressure pump 60, and the ECU 26 may decide that the negative pressure sensor 40 is malfunctioning if the detected value (M/P pressure Pmp) from the negative pressure sensor 40 falls outside the established range. The operating state of the negative pressure pump 60 includes the output power and rotational speed, which is proportional to the engine rotational speed NE in the above embodiment, of the negative pressure pump 60.

(2-3. Others)

In the above embodiment, a malfunction of the negative pressure sensor 40 is judged based on operating state of the negative pressure pump 60. Conversely, the negative pressure pump 60 may be judged for a malfunction based on the detected value from the negative pressure sensor 40. In addition to the negative pressure pump 60 and the negative pressure sensor 40, a means for monitoring the negative pressure pump 60 or the negative pressure sensor 40 for a malfunction, e.g., another negative pressure sensor or an intake pressure sensor as disclosed in JP10-157613A, may be employed for an excellent failsafe capability.

(3) Others:

In the above embodiment, both the first malfunction judging process and the second malfunction judging process are performed. However, only one of the first malfunction judging process and the second malfunction judging process may be performed.

4. Others:

In the above embodiment, the vehicle 10 incorporates the turbocharger 16. Instead, the vehicle 10 may incorporate a supercharger for generating a negative pressure. Alternatively, the vehicle 10 may incorporate neither the turbocharger 16 nor a supercharger.

A vehicular brake apparatus (11) includes a fluid pressure sensor (38) for detecting a master cylinder pressure (Pmc) or a wheel cylinder pressure, a negative pressure estimator (26) for calculating an estimated value (ΔPmpE) of a negative pressure of a negative-pressure-type booster (20) based on the master cylinder pressure (Pmc) or the wheel cylinder pressure which is detected by the fluid pressure sensor (38), and a malfunction detector (26) for detecting a malfunction of a negative pressure sensor (40) by comparing the estimated value (ΔPmpE) of the negative pressure estimated by the negative pressure estimator (26) and a detected value (ΔPmpS) of the negative pressure detected by the negative pressure sensor (40) with each other.

**Claims**

1. A vehicular brake apparatus (11) comprising:

   negative pressure detecting means (40) connected to a negative pressure chamber (200) of a negative-pressure-type booster (20);
   a master cylinder (50) which is actuated under forces boosted by the negative-pressure-type booster (20) in response to an input action applied to a brake operating member (18), for generating a fluid pressure to pressurize a wheel cylinder (54) for thereby braking a road wheel (58);
   fluid pressure detecting means (38) for detecting a master cylinder pressure (Pmc) or a wheel cylinder pressure;
   negative pressure estimating means (26) for calculating an estimated value (ΔPmpE) of a negative pressure of the negative-pressure-type booster (20) based on the master cylinder pressure (Pmc) or the wheel cylinder pressure which is detected by the fluid pressure detecting means (38); and

malfunction detecting means (26) for detecting a malfunction of the negative pressure detecting means (40) by comparing the estimated value (ΔPmpE) of the negative pressure estimated by the negative pressure estimating means (26) and a detected value (ΔPmpS) of the negative pressure detected by the negative pressure detecting means (40) with each other,

a negative pressure pump (60) connected to the negative-pressure-type booster (20), for generating a negative pressure in response to operation of an actuator (12); **characterized by**

second malfunction detecting means (26) for detecting a malfunction of the negative pressure detecting means (40) based on an operating time period or an operating state of the actuator (12) and a detected value (Pmp) from the negative pressure detecting means (40).

2. The vehicular brake apparatus (11) according to claim 1, wherein the negative pressure estimating means (26) includes:

an input action increase determiner (26) for judging an increase in the input action applied to the brake operating member (18);

an input action decrease determiner (26) for judging a decrease in the input action applied to the brake operating member (18); and

consumed negative pressure quantity calculating means (26) for calculating a consumed negative pressure quantity (ΔPmpE) due to the increase and decrease in the input action, as the estimated value (ΔPmpE) of the negative pressure.

3. The vehicular brake apparatus (11) according to claim 1 or 2, wherein the malfunction detecting means (26) does not detect a malfunction of the negative pressure detecting means (40) based on the estimated value (ΔPmpE) of the negative pressure if a time-dependent change of the detected value (ΔPmpS) of the negative pressure is less than a prescribed value (TH1).

4. The vehicular brake apparatus (11) according to any one of claims 1 through 3, wherein the malfunction detecting means (26) performs a sequence for judging a malfunction of the negative pressure detecting means (40) only if at least one of the detected value (ΔPmpS) of the negative pressure, the estimated value (ΔPmpE) of the negative pressure, the master cylinder pressure (Pmc), and the wheel cylinder pressure satisfies a prescribed reference value.

5. The vehicular brake apparatus (11) according to claim 1, wherein the negative pressure pump (60) comprises a negative pressure pump (60) directly actuated by an internal combustion engine (12); and

the second malfunction detecting means (26) detects a malfunction of the negative pressure detecting means (40) if a rotational speed (NE) of the internal combustion engine (12) exceeds a rotational speed stabilization determining threshold value (L1) for judging whether a change in the rotational speed (NE) is stabilized or not.

6. The vehicular brake apparatus (11) according to any of claims 1 to 5, wherein the second malfunction detecting means (26) judges a malfunction of the negative pressure detecting means (40) if the master cylinder pressure (Pmc) or the wheel cylinder pressure is lower than a brake operation threshold value (L2) for judging whether the brake operating member (18) is operated or not.

7. The vehicular brake apparatus (11) according to any one of claims 1 through 6, further comprising a supercharging device (16) connected to the intake pipe of the internal combustion engine (12) which is connected to the negative pressure chamber (200),

wherein the second malfunction detecting means (26) inhibits a sequence for judging a malfunction of the negative pressure detecting means (40) if the supercharging device (16) malfunctions.

**Patentansprüche**

1. Fahrzeugbremsvorrichtung (11), umfassend:

ein Unterdruckerfassungsmittel (40), das mit einer Unterdruckkammer (200) eines Unterdruckverstärkers (20) verbunden ist;

einen Hauptzylinder (50), der unter durch den Unterdruckverstärker (20) verstärkten Kräften in Antwort auf eine auf ein Bremsbetätigungselement (18) ausgeübten Eingabeaktion aktiviert wird, um einen Fluiddruck zu erzeugen, um einen Radzylinder (54) unter Druck zu setzen, um hierdurch ein Straßenrad (58) zu bremsen;
ein Fluiddruckerfassungsmittel (38) zum Erfassen eines Hauptzylinderdrucks (Pmc) oder eines Radzylinderdrucks;
ein Unterdruckschätzmittel (26) zum Berechnen eines geschätzten Werts (ΔPmpE) des Unterdrucks des Unterdruckverstärkers (20) basierend auf dem Hauptzylinderdruck (Pmc) oder dem Radzylinderdruck, der von dem Fluiddruckerfassungsmittel (38) erfasst wird; und
ein Fehlfunktionserfassungsmittel (26) zum Erfassen einer Fehlfunktion des Unterdruckerfassungsmittels (40), indem der geschätzte Wert (ΔPmpE) des Unterdrucks, der durch das Unterdruckschätzmittel (26) geschätzt wird, und ein erfasster Wert (ΔPmpS) des Unterdrucks, der von dem Unterdruckerfassungsmittel (40) erfasst wird, miteinander verglichen werden,
eine Unterdruckpumpe (60), die mit dem Unterdruckverstärker (20) verbunden ist, um in Antwort auf Betätigung des Aktuators (12) einen Unterdruck zu erzeugen;
**gekennzeichnet durch**
ein zweites Fehlfunktionserfassungsmittel (26) zum Erfassen einer Fehlfunktion des Unterdruckerfassungsmittels (40) basierend auf einer Betätigungszeitdauer oder einem Betriebszustand des Aktuators (12) und einem erfassten Wert (Pmp) von dem Unterdruckerfassungsmittel (40).

2. Die Fahrzeugbremsvorrichtung (11) nach Anspruch 1, worin das Unterdruckschätzmittel (26) enthält:

einen Eingabaktions-Zunahmebestimmer (26) zum Bewerten einer Zunahme in der auf das Bremsbetätigungselement (18) ausgeübten Eingabeaktion;
einen Eingabeaktions-Abnahmebestimmer (26) zum Bewerten einer Abnahme in der auf das Bremsbetätigungselement (18) ausgeübten Eingabeaktion; und
ein Verbrauchte-Unterdruckmenge-Berechnungsmittel (26) zum Berechnen einer verbrauchten Unterdruckmenge (ΔPmpE) aufgrund der Zunahme und Abnahme der Eingabeaktion, als den geschätzten Wert (ΔPmpE) des Unterdrucks.

3. Die Fahrzeugbremsvorrichtung (11) nach Anspruch 1 oder 2, worin das Unterdruckfunktionserfassungsmittel (26) eine Fehlfunktion des Unterdruckerfassungsmittels (40) basierend auf dem geschätzten Wert (ΔPmpE) des Unterdrucks nicht erfasst, wenn eine zeitabhängige Änderung des erfassten Werts (ΔPmpS) des Unterdrucks kleiner als ein vorgeschriebener Wert (TH1) ist.

4. Die Fahrzeugbremsvorrichtung (11) nach einem der Ansprüche 1 bis 3, worin das Fehlfunktionserfassungsmittel (26) eine Sequenz zum Bewerten einer Fehlfunktion des Unterdruckerfassungsmittels (40) nur dann durchführt, wenn der erfasste Wert (ΔPmpS) des Unterdrucks und/oder der geschätzte Wert (ΔPmpE) des Unterdrucks und/oder der Hauptzylinderdruck (Pmc) und/oder der Radzylinderdruck einen vorgeschriebenen Referenzwert erfüllt.

5. Die Fahrzeugbremsvorrichtung (11) nach Anspruch 1, worin die Unterdruckpumpe (60) eine Unterdruckpumpe (60) aufweist, die direkt von einem Verbrennungsmotor (12) aktiviert wird; und
das zweite Fehlfunktionserfassungsmittel (26) eine Fehlfunktion des Unterdruckerfassungsmittels (40) erfasst, wenn eine Drehzahl (NE) des Verbrennungsmotors (12) einen Drehzahlstabilisierungsbestimmungsschwellenwert (L1) überschreitet, zur Bewertung, ob eine Änderung in der Drehzahl (NE) stabilisiert ist oder nicht.

6. Die Fahrzeugbremsvorrichtung (11) nach einem der Ansprüche 1 bis 5, worin das zweite Fehlfunktionserfassungsmittel (26) eine Fehlfunktion des Unterdruckerfassungsmittels (40) bewertet, wenn der Hauptzylinderdruck (Pmc) oder der Radzylinderdruck niedriger als ein Bremsbetätigungsschwellenwert (L2) ist, zur Bewertung, ob das Bremsbetätigungselement (18) betätigt wird oder nicht.

7. Die Fahrzeugbremsvorrichtung (11) nach einem der Ansprüche 1 bis 6, die ferner eine Aufladevorrichtung (16) aufweist, die mit dem Einlassrohr des Verbrennungsmotors (12) verbunden ist, das mit der Unterdruckkammer (200) verbunden ist,
worin das zweite Fehlfunktionserfassungsmittel (26) eine Sequenz zur Bewertung einer Fehlfunktion des Unterdruckerfassungsmittels (40) verhindert, wenn die Aufladevorrichtung (16) fehlerhaft ist.

**Revendications**

1. Un dispositif de freinage d'un véhicule (11) comprenant :

des moyens de détection d'une pression négative (40) raccordés à une chambre sous pression négative (200) d'un servofrein du type à pression négative (20) ;

un maître-cylindre (50) qui est actionné sous l'action de forces amplifiées par le servofrein du type à pression négative (20) en réponse à une action d'entrée appliquée sur un élément d'actionnement du frein (18) pour générer une pression de fluide afin de mettre un cylindre de roue (54) sous pression pour freiner de cette manière une roue en contact avec la route (58) ;

des moyens de détection de la pression de fluide (38) pour détecter la pression d'un maître-cylindre (Pmc) ou la pression d'un cylindre de roue ;

des moyens d'estimation de la pression négative (26) pour calculer une valeur estimée ($\Delta$PmpE) d'une pression négative du servofrein du type à pression négative (20), sur la base de la pression du maître-cylindre (Pmc) ou la pression du cylindre de roue qui est détectée par les moyens de détection de la pression de fluide (38) ; et

des moyens de détection de dysfonctionnements (26) pour détecter un dysfonctionnement des moyens de détection à pression négative (40) en comparant entre elles la valeur estimée ($\Delta$PmpE) de la pression négative estimée par les moyens d'estimation de la pression négative (26) et une valeur détectée ($\Delta$PmpS) de la pression négative détectée par les moyens de détection de pression négative (40),

une pompe à pression négative (60) raccordée au servofrein du type à pression négative (20) pour générer une pression négative en réponse au fonctionnement d'un actionneur (12) ; **caractérisé en ce que** des deuxièmes moyens de détection de dysfonctionnements (26) pour détecter un dysfonctionnement des moyens de détection de la pression négative (40) sur la base d'un temps de fonctionnement ou d'un état de fonctionnement de l'actionneur (12) et d'une valeur détectée (Pmp) à partir des moyens de détection de la pression négative (40).

2. Le dispositif de freinage d'un véhicule (11) selon la revendication 1, dans lequel les moyens d'estimation de la pression négative (26) comprennent :

un dispositif de détermination de l'augmentation de l'action d'entrée (26) pour juger d'une augmentation de l'action d'entrée appliquée sur l'élément d'actionnement du frein (18) ;

un dispositif de détermination d'une réduction de l'action d'entrée (26) pour juger d'une réduction de l'action d'entrée appliquée sur l'élément d'actionnement du frein (18) ; et

des moyens de calcul de la quantité de pression négative consommée (26) pour calculer une quantité de pression négative consommée ($\Delta$PmpE) en raison de l'augmentation et de la diminution de l'action d'entrée comme la valeur estimée ($\Delta$PmpE) de la pression négative.

3. Le dispositif de freinage d'un véhicule (11) selon l'une des revendications 1 ou 2, dans lequel les moyens de détection d'un dysfonctionnement (26) ne détectent pas un dysfonctionnement des moyens de détection de la pression négative (40) sur la base de la valeur estimée ($\Delta$PmpE) de la pression négative si un changement, en fonction du temps, de la valeur détectée ($\Delta$PmpS) de la pression négative est inférieur à une valeur prescrite (TH1).

4. Le dispositif de freinage d'un véhicule (11) selon l'une des revendications 1 à 3, dans lequel les moyens de détection d'un dysfonctionnement (26) effectuent une séquence pour juger d'un dysfonctionnement des moyens de détection de la pression négative (40), uniquement si au moins l'un des paramètres de la valeur détectée ($\Delta$PmpS) de la pression négative, la valeur estimée ($\Delta$PmpE) de la pression négative, la pression du maître-cylindre (Pmc) et la pression du cylindre de roue satisfait à une valeur de référence prescrite.

5. Le dispositif de freinage d'un véhicule (11) selon la revendication 1, dans lequel la pompe à pression négative (60) comprend une pompe à pression négative (60) actionnée directement par un moteur à combustion interne (12) ; et les deuxièmes moyens de détection d'un dysfonctionnement (26) détectent un dysfonctionnement des moyens de détection d'une pression négative (40) si une vitesse de rotation (NE) du moteur à combustion interne (12) dépasse une valeur seuil de détermination de la stabilisation de la vitesse de rotation (L1) pour juger si un changement dans la vitesse de rotation (NE) est stabilisé ou non.

6. Le dispositif de freinage d'un véhicule (11) selon l'une des revendications 1 à 5, dans lequel les deuxièmes moyens de détection d'un dysfonctionnement (26) jugent un dysfonctionnement des moyens de détection de la pression négative (40) si la pression du maître-cylindre (Pmc) ou la pression du cylindre de roue est inférieure à la valeur seuil de fonctionnement du frein (L2) pour juger si l'élément de fonctionnement du frein (18) est actionné ou non.

7. Le dispositif de freinage d'un véhicule (11) selon l'une des revendications 1 à 6, comprenant par ailleurs un dispositif de suralimentation (16) raccordé au tuyau d'admission du moteur à combustion interne (12) qui est raccordé à la chambre à pression négative (200),

dans lequel les deuxièmes moyens de détection d'un dysfonctionnement (26) empêchent une séquence de juger un dysfonctionnement des moyens de détection de la pression négative (40) en cas de dysfonctionnement du dispositif de suralimentation (16 ).

# FIG. 1

EP 2 505 446 B1

FIG. 2

26

```
┌─────────────────────────────────────────────┐
│ ECU                                          │
│  ┌────────────────────────────────────────┐  │
│  │        INPUT/OUTPUT INTERFACE          │  │ ← 70
│  └────────────────────────────────────────┘  │
│  ┌────────────────────────────────────────┐  │
│  │ PROCESSOR                              │  │ ← 72
│  │  ┌──────────────────────────────────┐  │  │
│  │  │      ENGINE CONTROL FUNCTION     │  │  │ ← 80
│  │  └──────────────────────────────────┘  │  │
│  │  ┌──────────────────────────────────┐  │  │
│  │  │       ABS CONTROL FUNCTION       │  │  │ ← 82
│  │  └──────────────────────────────────┘  │  │
│  │  ┌──────────────────────────────────┐  │  │
│  │  │       VSA CONTROL FUNCTION       │  │  │ ← 84
│  │  └──────────────────────────────────┘  │  │
│  │  ┌──────────────────────────────────┐  │  │
│  │  │    HILL HOLD CONTROL FUNCTION    │  │  │ ← 86
│  │  └──────────────────────────────────┘  │  │
│  │  ┌──────────────────────────────────┐  │  │
│  │  │ T/C CONTROL FUNCTION             │  │  │ ← 88
│  │  │  ┌────────────────────────────┐  │  │  │
│  │  │  │   T/C FAILURE DETECTING     │  │  │  │ ← 92
│  │  │  │         FUNCTION            │  │  │  │
│  │  │  └────────────────────────────┘  │  │  │
│  │  └──────────────────────────────────┘  │  │
│  │  ┌──────────────────────────────────┐  │  │
│  │  │ NEGATIVE PRESSURE SYSTEM         │  │  │ ← 90
│  │  │ CONTROL FUNCTION                 │  │  │
│  │  │  ┌────────────────────────────┐  │  │  │
│  │  │  │ NEGATIVE PRESSURE SENSOR    │  │  │  │ ← 94
│  │  │  │ MALFUNCTION JUDGING         │  │  │  │
│  │  │  │       FUNCTION              │  │  │  │
│  │  │  └────────────────────────────┘  │  │  │
│  │  └──────────────────────────────────┘  │  │
│  └────────────────────────────────────────┘  │
│  ┌────────────────────────────────────────┐  │
│  │             STORAGE UNIT               │  │ ← 74
│  └────────────────────────────────────────┘  │
└─────────────────────────────────────────────┘
```

# FIG. 3

```
                    ┌─────────────┐
                    │    START    │
                    └─────────────┘
                           │
        ┌──────────────────────────────────┐
        ║ JUDGE MALFUNCTION JUDGING         ║ S1
        ║          CONDITION                ║
        └──────────────────────────────────┘
                           │
          ╱──────────────────────────────╲
         ╱   MALFUNCTION JUDGING           ╲ S2      NO
         ╲   CONDITION SATISFIED ?         ╱─────────────►
          ╲──────────────────────────────╱
                           │ YES
        ┌──────────────────────────────────┐
        ║      JUDGE MALFUNCTION            ║ S3
        └──────────────────────────────────┘
                           │
          ╱──────────────────────────────╲ S4      NO
         ╱        MALFUNCTION ?            ╲─────────────►
          ╲──────────────────────────────╱
                           │ YES
        ┌──────────────────────────────────┐
        │       ISSUE WARNING              │ S5
        └──────────────────────────────────┘
                           │
                    ┌─────────────┐
                    │     END     │
                    └─────────────┘
```

# FIG. 4

MALFUNCTION JUDGING SEQUENCE
OF FIRST MALFUNCTION JUDGING
PROCESS (S3)

( START )

| ACQUIRE M/P PRESSURE PmpS (DETECTED VALUE) | S11 |

| PROCESS PmpS FOR COMPARISON (CALCULATE MEASURED CONSUMED QUANTITY $\Delta$PmpS OF M/P PRESSURE) | S12 |

| ACQUIRE BRAKE FLUID PRESSURE Pmc | S13 |

| CALCULATE ESTIMATED CONSUMED QUANTITY $\Delta$PmpE OF M/P PRESSURE BASED ON Pmc | S14 |

| COMPARE $\Delta$PmpS AND $\Delta$PmpE | S15 |

IS DIFFERENCE LARGE ? — S16 — YES

NO

| JUDGE AS NORMAL | S17 |

| JUDGE AS MALFUNCTIONING | S18 |

( RETURN )

FIG. 5

100 CALCULATION PERMITTING CONDITION

F1

102 M/P PRESSURE

PmpS

106 DETERMINE TIMING TO START CALCULATION

F2

104 BRAKE FLUID PRESSURE

Pmc

PmpS

INITIAL VALUE (START POINT CALCULATION)

110 CALCULATE ESTIMATED CONSUMED QUANTITY OF M/P PRESSURE

F2

108 CALCULATE MEASURED CONSUMED QUANTITY OF M/P PRESSURE

TIMING TO CALCULATE GRADIENT (SMALLER GRADIENT)

$\Delta$PmpE

100hPa

112 >

Tr1

120 CALCULATE GRADIENT

$Kpp = \dfrac{\Delta PmpS}{\Delta PmpE}$

Tr2

118 &

$\Delta$PmpS

114 >

100hPa

TIMING TO CALCULATE GRADIENT (GREATER GRADIENT)

10hPa

116 >

122 PERFORM FILTERING PROCESS

$Kppf = \alpha \cdot Kppf + (1-\alpha) \cdot Kpp$

STORE IN STORAGE UNIT

1.50

128 >

0.50

126 <

130 OUTPUT JUDGMENT

EP 2 505 446 B1

# FIG. 6

CHANGE IN M/P PRESSURE WHEN BRAKE
PEDAL IS DEPRESSED OR
RELEASED

CHANGE IN M/P
PRESSURE
$\Delta$Pmp [hPa]

BRAKE FLUID PRESSURE AND CHANGE
IN M/P PRESSURE AT THE
END OF CALCULATION

P4

END POINT

$\Delta$PmpE

P3

P2

P1

START POINT

BRAKE FLUID PRESSURE
Pmc [kPa]

BRAKE FLUID PRESSURE AND CHANGE
IN M/P PRESSURE AT THE
START OF CALCULATION

## FIG. 7

START

ACQUIRE INITIAL VALUE PmpS1 OF M/P PRESSURE — S21

ACQUIRE BRAKE FLUID PRESSURE Pmc — S22

CALCULATE CHANGE $\Delta$Pmc OF Pmc — S23

IS BRAKE PEDAL BEING DEPRESSED ? — S24 — YES

NO

SELECT EQUATION FOR BRAKE PEDAL BEING DEPRESSED — S27

IS BRAKE PEDAL BEING RELEASED ? — S25 — YES

NO

SELECT EQUATION FOR BRAKE PEDAL BEING RELEASED — S28

CALCULATE PRESENT VALUES $\{Pp(x), Pr(x)\}$ — S29

HOLD PRECEDING VALUES $\{Pp(n-1), Pr(n-1)\}$ — S26

CALCULATE AND OUTPUT ESTIMATED CONSUMED QUANTITY $\Delta$PmpE OF M/P PRESSURE — S30

NO — CALCULATION FINISHED ? — S31

YES

END

# FIG. 8

SEQUENCE FOR JUDGING
MALFUNCTION JUDGING
CONDITION ABOUT SECOND
MALFUNCTION JUDGING
PROCESS (S1)

START

S41 CAN ENGINE BE STOPPED FROM IDLING ?
NO
YES

S42 STOP IDLING

S43 PRESCRIBED TIME PERIOD ELAPSED AFTER ENGINE STOPPED IDLING ?
NO
YES

S44 RESTART ENGINE

S45 PRESCRIBED TIME PERIOD ELAPSED AFTER ENGINE RESTARTED ?
NO
YES

S46 IS FLUID PRESSURE SENSOR NORMAL ?
YES
NO

S47 IS ABS CONTROL FUNCTION WORKING ?
YES
NO

S48 IS VSA CONTROL FUNCTION WORKING ?
YES
NO

S49 NE > L1 (= 1000 RPM) ?
NO
YES

S50 BRAKE FLUID PRESSURE < L2 (= 100 kPa) ?
NO
YES

S51 IS TURBOCHARGER NORMAL ?
NO
YES

S52 PRESCRIBED TIME PERIOD ELAPSED ?
NO
YES

S54 DECIDE THAT MALFUNCTION JUDGING CONDITION IS NOT SATISFIED

S53 DECIDE THAT MALFUNCTION JUDGING CONDITION IS SATISFIED

RETURN

# FIG. 9

EP 2 505 446 B1

# FIG. 10

MALFUNCTION JUDGING SEQUENCE
OF SECOND MALFUNCTION JUDGING
PROCESS (S3)

( START )

ACQUIRE MASTER POWER PRESSURE Pmp — S61

IS Pmp WITHIN PRESCRIBED RANGE ? — S62 — YES

NO

RESET MALFUNCTION FLAG — S63

NO — PRESCRIBED TIME PERIOD ELAPSED AFTER MALFUNCTION JUDGING SEQUENCE STARTED ? — S64

YES

SET MALFUNCTION FLAG (LOW-PRESSURE OR HIGH-PRESSURE) — S65

NO — SAME MALFUNCTION FLAG SET SUCCESSIVELY THREE TIMES ? — S66

YES

FINALLY JUDGE AS MALFUNCTIONING — S67

( RETURN )

**EP 2 505 446 B1**

**Patent documents cited in the description**

- JP 10157613 A
- DE 102007003741
- DE 19935899 A1